# EUROPEAN PATENT APPLICATION

(11) **EP 2 950 188 A1**
(43) Date of publication of application: **02.12.2015**
(21) Application number: 15169274.6
(22) Date of filing: 26.05.2015
(51) Int. Cl.: G06F 3/041

(54) **METHOD AND ELECTRONIC DEVICE FOR CONTROLLING DISPLAY**

(30) Priority: 26.05.2014 KR 20140063311
(71) Applicant: Samsung Electronics Co., Ltd, Gyeonggi-do 443-742 (KR)
(72) Inventor: Bae, Soo Jung, 138-761 Seoul (KR); Lee, Min Hee, 135-860 Seoul (KR); Lee, Ho Young, 134-859 Seoul (KR); Choi, Hye Ryoung, 423-746 Gyeonggi-do (KR); Jang, Chul Ho, 156-773 Seoul (KR); Kim, Ha Young, 426-771 Gyeonggi-do (KR)
(74) Representative: Jenkins, Richard Gavin

(57) **Abstract**

An electronic device and a display controlling method are provided. The electronic device includes a display module including a first display and a second display, an input interface configured to receive a user input sensed on at least one of the first display and the second display, and a controller configured to inactivate a touch input on at least a partial display area of at least one of the first display and the second display, based on the user input.

## Description

### TECHNICAL FIELD

The present disclosure relates to a display controlling method and an electronic device.

### BACKGROUND

Recently, there has been an increasing need for a user interface (UI) and a user experience (UX) that can consider a user and provide a user-friendly use environment as a result of interactions between the user and an electronic device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a display controlling method and an electronic device.

In accordance with an aspect of the present disclosure an electronic device is provided. The electronic device includes a display module including a first display and a second display, an input interface configured to receive a user input on at least one of the first display and the second display, and a controller configured to inactivate a touch input on at least a partial display area of at least one of the first display and the second display, based on the user input.

In accordance with another aspect of the present disclosure a display controlling method is provided. The display controlling method includes receiving a user input on at least one of a first display and a second display of an electronic device and inactivating a touch input on at least a partial display area of at least one of the first display and the second display, based on the user input.

Another aspect of the present disclosure provides a computer program comprising instructions arranged, when executed, to implement a method in accordance with any one of the above-described aspects. A further aspect provides machine-readable storage storing such a program.

Various respective aspects and features of the present disclosure are defined in the appended claims.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram schematically illustrating an electronic device according to an embodiment of the present disclosure;
FIG. 2 is a block diagram schematically illustrating an electronic device according to an embodiment of the present disclosure;
FIG. 3 is a block diagram schematically illustrating an electronic device according to an embodiment of the present disclosure;
FIG. 4 is a block diagram illustrating an electronic device according to an embodiment of the present disclosure;
FIGS. 5A and 5B illustrate screens indicating an operation for inactivating at least one display when an electronic device receives a specific touch input, according to various embodiments of the present disclosure;
FIGS. 6A and 6B illustrate screens in which at least one segmented display is inactivated when a specific touch input is generated at an electronic device, according to an embodiment of the present disclosure;
FIGS. 7A and 7B illustrate screens in which at least a portion of at least one segmented display is inactivated when a specific touch input is generated at an electronic device, according to various embodiments of the present disclosure;
FIGS. 8A and 8B illustrate screens in which a palm touch area corresponding to at least a portion of at least one segmented display is inactivated based on a palm touch area according to an orientation of an electronic device, according to various embodiments of the present disclosure;
FIG. 9 illustrates a screen in which at least one segmented display is inactivated when a touch input is generated over a specific count at an electronic device, according to an embodiment of the present disclosure;
FIGS. 10A and 10B illustrate screens in which at least one segmented display is inactivated when a specific touch input is generated over a specific count at an electronic device, according to various embodiments of the present disclosure;
FIG. 11 illustrates a screen in which at least one segmented display is inactivated when a specific touch input is generated over a specific count at an electronic device, according to an embodiment of the present disclosure;
FIG. 12 illustrates a screen in which at least one segmented display is inactivated when a touch input is generated at a boundary where a plurality of displays of an electronic device are in contact with each other, according to an embodiment of the present disclosure;
FIG. 13 illustrates a screen in which at least one segmented display is inactivated when a touch input is generated at a boundary where a plurality of displays of an electronic device are in contact with each other, according to an embodiment of the present disclosure;
FIG. 14 illustrates a screen in which at least one segmented display is inactivated when a scroll input is generated at a boundary where a plurality of displays of an electronic device are in contact with each other, according to an embodiment of the present disclosure;
FIGS. 15A and 15B illustrate screens in which at least one segmented display is inactivated when a scroll input for scrolling an object displayed on at least one segmented display goes over to another segmented display, according to various embodiments of the present disclosure;
FIG. 16 illustrates a screen in which at least one segmented display is inactivated when a touch input starting from one display of an electronic device goes over to another display thereof, according to an embodiment of the present disclosure;
FIGS. 17A and 17B illustrate screens in which a screen layout of at least one segmented display is rearranged when an object is placed on a palm touch area of an electronic device, according to various embodiments of the present disclosure;
FIGS. 18A and 18B illustrate screens in which a screen layout of at least one segmented display is rearranged when an object is placed on a palm touch area of an electronic device, according to various embodiments of the present disclosure; and
FIG. 19 is a flow chart illustrating a display controlling method of an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The terms "include," "comprise," "including," and/or "comprising" used herein indicate disclosed functions, operations, and/or an existence of elements but do not exclude other functions, operations and/or elements. It should be further understood that the terms "include," "comprise," "have," "including," "comprising," and/or "having" used herein specify the presence of stated features, integers, operations, elements, components, and/or combinations thereof but do not preclude the presence or addition of one or more other features, integers, operations, elements, components, and/or combinations thereof.

The meaning of the terms "or" and/or "at least one of A and/or B" used herein include any combination of words listed together with the term. For example, the expressions "A or B" and/or "at least one of A and/or B" may indicate A, or B, or both A and B.

The terms, such as "first," "second," and the like used herein may refer to various elements of various embodiments of the present disclosure, but do not limit the elements. For example, such terms do not limit the order and/or priority of the elements. Furthermore, such terms may be used to distinguish one element from another element. For example, "a first user device" and "a second user device" indicate different user devices. For example, without departing the scope of the present disclosure, a first element may be referred to as a second element, and similarly, a second element may be referred to as a first element.

It will be understood that when an element is referred to as being "connected" and/or "coupled" to another element, it can be directly connected or coupled to the other element or intervening elements may be present. In contrast, when an element is referred to as being "directly connected" and/or "directly coupled" to another element, it should be understood that there are no intervening elements.

Terms used in this specification are used to describe embodiments of the present disclosure and are not intended to limit the scope of the present disclosure. The term 'inactivate' may include the operation to deactivate or render inactive. In particular, throughout the present disclosure, the verb "inactivate" is coined to indicate that the entity upon which it acts is rendered in an inactivated operational state and the noun "inactivation" also refers to that inactivated operational state. Likewise, the expression "inactivate a touch input" is an abbreviation for "rendering a touch input function [associated with a given display or display area] in an inactivated state". Where a display is said to be "inactivated" this indicates that one or more functions of the display are rendered in an inactivated state; in particular, that the touch input function associated with the display is rendered in an inactivated state. Further, the expression 'inactivate a touch input' may indicate that making the touch input invalid except a user input to cancel or release the inactivation state. The terms of a singular form may include plural forms unless otherwise specific.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal sense unless expressly so defined herein in various embodiments of the present disclosure.

Electronic devices according to various embodiments of the present disclosure may include a communication function. For example, the electronic devices may include at least one of smartphones, tablet personal computers (PCs), mobile phones, video telephones, electronic book readers, desktop PCs, laptop PCs, netbook computers, personal digital assistants (PDAs), portable multimedia players (PMPs), Motion Picture Experts Group (MPEG-1 or MPEG-2) Audio Layer 3 (MP3) players, mobile medical devices, cameras, wearable devices (e.g., head-mounted-devices (HMDs), such as electronic glasses), an electronic apparel, electronic bracelets, electronic necklaces, electronic appcessories, electronic tattoos, smart watches, and the like.

According to various embodiments of the present disclosure, the electronic devices may be smart home appliances including metal cases. The smart home appliances may include at least one of, for example, televisions (TVs), digital versatile disc (DVD) players, audios, refrigerators, air conditioners, cleaners, ovens, microwave ovens, washing machines, air cleaners, set-top boxes, TV boxes (e.g., Samsung HomeSync^{™}, Apple TV^{™}, or Google TV^{™}), game consoles, electronic dictionaries, electronic keys, camcorders, electronic picture frames, and the like.

According to various embodiments of the present disclosure, the electronic devices may include at least one of medical devices (e.g., a magnetic resonance angiography (MRA) device, a magnetic resonance imaging (MRI) device, a computed tomography (CT) device, scanners, and ultrasonic devices), navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), and points of sales (POSs) devices including metal cases.

According to various embodiments of the present disclosure, the electronic devices may include at least one of parts of furniture or buildings/structures having communication functions, electronic boards, electronic signature receiving devices, projectors, and measuring instruments (e.g., water meters, electricity meters, gas meters, and wave meters) including metal cases. The electronic devices according to various embodiments of the present disclosure may be one or more combinations of the above-mentioned devices. Furthermore, the electronic devices according to various embodiments of the present disclosure may be flexible devices. It would be obvious to those skilled in the art that the electronic devices according to various embodiments of the present disclosure are not limited to the above-mentioned devices.

Hereinafter, electronic devices according to various embodiments of the present disclosure will be described with reference to the accompanying drawings. The term "user" used herein may refer to a person who uses an electronic device or may refer to a device (e.g., an artificial electronic device) that uses an electronic device.

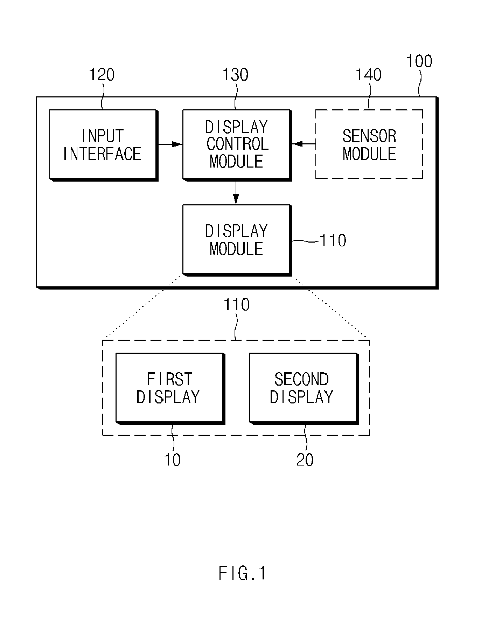

FIGS. 1 through 19, discussed below, and the various embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element.

FIG. 1 is a block diagram schematically illustrating an electronic device according to an embodiment of the present disclosure.

Referring to FIG. 1, an electronic device 100 is illustrated, where the electronic device 100 may contain a display module 110, an input interface 120, and a display control module or a controller 130. In this specification, components associated with the embodiment of the present disclosure will be merely described to prevent the scope of the present disclosure from becoming ambiguous. Accordingly, it will be understood that other universal components as well as components illustrated in FIG. 1 are further included.

According to various embodiments of the present disclosure, the display module 110 may include the following display devices and hardware and software modules for driving the display devices: a touch screen, a liquid crystal display (LCD), a thin film transistor-liquid crystal display (TFT-LCD), an organic light-emitting diode (OLED), a flexible display, a three dimensional (3D) display, and the like.

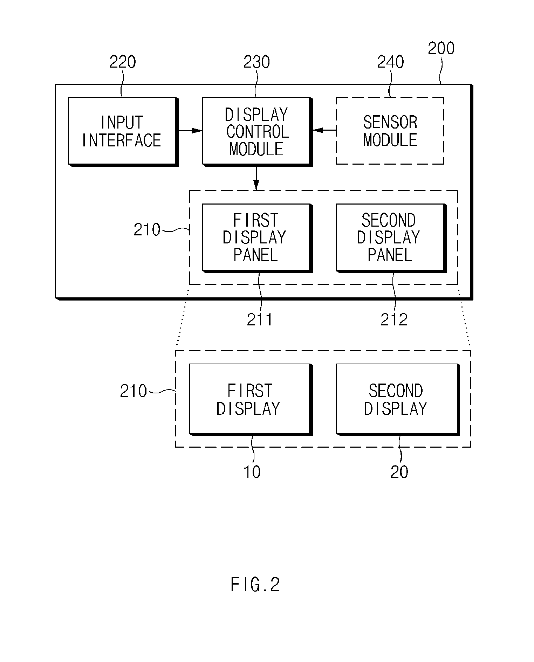

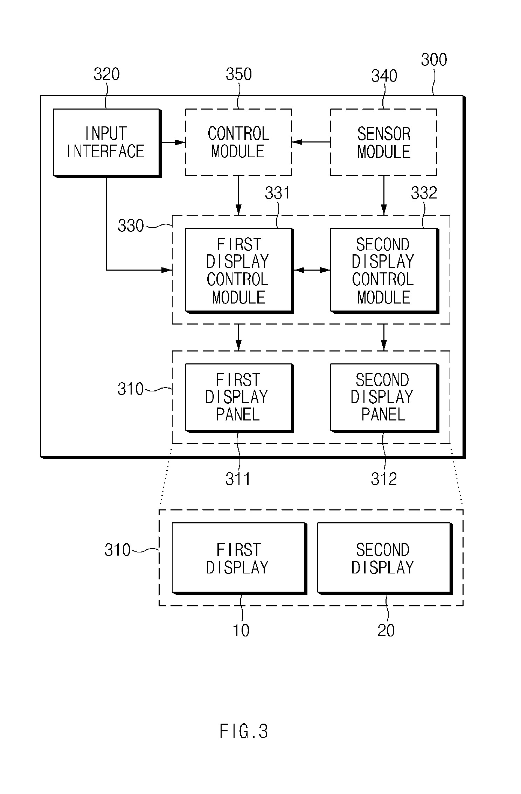

The display module 110 of the electronic device 100 according to various embodiments of the present disclosure may include a plurality of displays. The plurality of displays may be implemented by dividing one display panel into a plurality of display areas, or the plurality of displays may be implemented with separate display panels, respectively. The display module 110 of the electronic device 100 according to an embodiment of the present disclosure may be illustrated as one display panel is divided into a plurality of display areas. An embodiment in which plural displays are respectively implemented with separate display panels will be more fully described with reference to FIGS. 2 and 3.

The display module 110 may include a display area divided into a first display 10 and a second display 20. The scope of the present disclosure may not be limited thereto, and the display module 110 may include a plurality of, for example, three or more display areas functionally segmented.

The display module 110 may include the first display 10 and the second display 20 as segmented display areas.

For example, the display module 110 may include the first display 10 as a main screen and the second display 20 as a sub screen. Furthermore, the display module 110 may include the first display 10 at a front surface of the electronic device 100 and the second display 20 at a side surface thereof. As another example, in a case where the display module 110 includes a flexible display as the display device, the first display 10 may correspond to a flat display area, and the second display 20 may correspond to a flexible area. The scope of the present disclosure may not be limited thereto, and the display module 110 may include the first display 10 and the second display 20, for example, in various shapes.

The display module 110 may output information processed in the electronic device 100 on the first display 10 and/or the second display 20. For example, the display module 110 may display various objects, such as an icon, a menu, an image, a text, a list, a scroll, and the like, on at least one of the first display 10 and/or the second display 20.

The input interface 120 may receive a user input on at least one of the first display 10 and the second display 20. For example, the input interface 120 may receive a touch input from a user. As another example, the input interface 120 may receive a sound input from the user. As still another example, the input interface 120 may receive a specific gesture from the user. However, the scope of the present disclosure may not be limited thereto. For example, the input interface 120 may receive user inputs in various forms.

According to various embodiments of the present disclosure, the input interface 120 may include the following input devices and hardware and software modules for driving the input devices: a microphone, a key pad, a dome switch, a touch pad (capacitive/resistive), a touch screen, a jog wheel, a jog switch, a hardware (H/W) button, and the like. Alternatively, the input interface 120 may further include a gesture sensor capable of detecting rotation or movement of the electronic device 100 or a user gesture, a gyro sensor, a magnetic sensor, an acceleration sensor, a proximity sensor, or the like.

The display control module or the controller 130 may inactivate a touch input on a partial display area of at least one of the first display 10 and the second display 20, based on the user input. In the following discussion, a touch input on the display area may indicate a touch input on a touch panel corresponding to the display area. Furthermore, reference to the inactivation of the touch input may indicate inactivation of a function of the input interface 120 that senses the touch input. The display control module or the controller 130 may control activation or inactivation of a touch input on a partial display area of at least one of the first display 10 and the second display 20. For example, if at least one of the first display 10 and the second display 20 has an off state, a touch input on a display having the off state may be inactivated according to a control of the display control module or the controller 130. The off state of a display may indicate that no object is displayed on that display. In contrast, an on state of a display may mean that at least one object is displayed on that display.

For example, a display area (at least a portion of at least one of the first display 10 and the second display 20) where the electronic device 100 and a user's right hand are in contact with each other may be inactivated when the user holds the electronic device 100 in her right hand. For example, in a case where the electronic device 100 is held in the right hand, a touch input of an area with which the thumb of the right hand contacts may be inactivated when the thumb of the right hand contacts with a display area of the electronic device 100.

Likewise, in another example, a display area (at least a portion of the first display 10 and the second display 20) where the electronic device 100 and the user's left hand are in contact with each other may be inactivated when a user holds the electronic device 100 in her left hand. For example, in a case where the electronic device 100 is held in the left hand, a touch input of an area with which four fingers of the left hand (remaining fingers other than the thumb) contact may be inactivated when the four fingers of the left hand contact with a display area of the electronic device 100.

Activation or inactivation of a touch input may be carried out regardless of an on/off state of a display. For example, a touch input of the first display 10 may be inactivated while the first display 10 remains at an on state. As another example, a touch input of the first display 10 may be activated while the first display 10 remains at an off state. Even though a touch input of at least one of the first display 10 and the second display 20 is activated or inactivated by the display control module or the controller 130, the first display 10 and the second display 20 may maintain states before the touch input is activated or inactivated.

Under a control of the display control module or the controller 130, an inactivated display may not sense (or detect) a touch input from a user. Alternatively, under a control of the display control module or the controller 130, an inactivated display may sense (or detect) a touch input from a user, while it may not react to the touch input of the user.

According to various embodiments of the present disclosure, in a case where the user input is sensed (or detected) from at least one of the first display 10 and the second display 20 according to a specific touch manner, the display control module or the controller 130 may inactivate a touch input on the whole area of at least one display, at which the touch input is sensed, of the first display 10 and the second display 20. For example, the specific touch manner may correspond to a "long press" where a touch input is maintained over a specific time. However, the scope of the present disclosure may not be limited thereto. For example, the specific touch manner may include various touch inputs such as a tap, a double tap, a swipe and hold, and the like.

According to various embodiments of the present disclosure, in a case where a touch input of at least one of the first display 10 and the second display 20 is inactivated and a touch input according to a specific touch manner is sensed at the inactivated display, the display control module or the controller 130 may activate a touch input on the inactivated display. The inactivated display may sense a touch input from a user, but may not react to remaining touch inputs of the user other than a touch input of the specific touch manner. The inactivated display may not react to a touch input of a user at a display on or off state and may be activated in response to a touch input of the specific touch manner.

For example, the specific touch manner may be the same as a touch manner in which a display is inactivated. As another example, the specific touch manner may be different from the touch manner in which a display is inactivated. For example, the specific touch manner may correspond to a "long press" where a touch input is maintained over a specific time. However, the scope of the present disclosure may not be limited thereto. For example, the specific touch manner may include various touch inputs such as a tap, a double tap, a swipe and hold, and the like.

According to various embodiments of the present disclosure, in a case where the user input is sensed from at least one of the first display 10 and the second display 20 according to a specific touch manner, the display control module or the controller 130 may inactivate a touch input on the whole area of at least one display, from which the touch input is not sensed, of the first display 10 and the second display 20. The electronic device 100 according to an embodiment of the present disclosure may inactivate a touch input on the whole area of a display from which a touch input is not sensed, thereby improving the convenience of a user.

For example, the specific touch manner may correspond to a "long press" where a touch input is maintained over a specific time. However, the scope of the present disclosure may not be limited thereto. For example, the specific touch manner may include various touch inputs such as a tap, a double tap, a swipe and hold, and the like. Alternatively, the specific touch manner may include various touch inputs, such as a pinch, a zoom-in/zoom-out, and the like.

According to various embodiments of the present disclosure, the display control module or the controller 130 may not apply the inactivation if the user input corresponds to a touch input for moving an object, which is displayed on at least one of the first display 10 and the second display 20, to the other display.

According to various embodiments of the present disclosure, the display control module or the controller 130 may inactivate a touch input on a display area assigned to a palm touch area if the user input is recognized as a palm touch input based on the palm touch area. The palm touch area may be a display area that corresponds to at least a portion of at least one of the first display 10 and the second display 20. For example, the palm touch area may be predetermined by a user. Through a palm touch area setting mode, the electronic device 100 may define a common area as a palm touch area, based on the frequency of palm touch inputs (i.e. the number of palm touch inputs repetitively performed exceeds a specific count threshold) at a state where a user holds the electronic device 100. The palm touch area may be set using an algorithm or program for extracting a palm touch area. In a case where a user employs at least one of the first display 10 and the second display 20 of the electronic device 100, the palm touch area thus set may make it possible to reduce an abnormal operation of the electronic device 100 due to a palm touch input of a user.

According to various embodiments of the present disclosure, the display control module or the controller 130 may release inactivation of a touch input on the palm touch area when the palm touch input is released. Inactivation of a touch input on the palm touch area may be temporarily applied to at least a portion of at least one of the first display 10 and the second display 20 while a palm touch input is maintained.

According to various embodiments of the present disclosure, when the user input is recognized as a palm touch input based on a palm touch area according to directivity (e.g. orientation, etc.) of the electronic device 100, the display control module or the controller 130 may inactivate a touch input on a display area set to a palm touch area according to the directivity. The palm touch area may be at least a partial display area, set according to directivity of the electronic device 100, of at least one of the first display 10 and the second display 20. For example, a palm touch area when the electronic device 100 has a landscape mode may be different from that when the electronic device 100 has a portrait mode.

According to various embodiments of the present disclosure, when an object is placed on the palm touch area, the display control module or the controller 130 may again arrange (or adjust) a screen layout of at least one display, on which the object is placed, of the first display 10 and the second display 20. For example, reconstitution of the screen layout may include at least one of moving of coordinates of the object, adjusting of the size of the object, or changing of the shape of the object.

For example, when a function object is placed on the palm touch area, the display control module or the controller 130 may move the coordinates of the function object to a display area not inactivated, thereby allowing a user to employ the function object. Alternatively, when all of the function object is not displayed on an activated display area, the display control module or the controller 130 may change a shape of the function object or may hide a portion of the function object. Alternatively, when a text is placed on the palm touch area, the display control module or the controller 130 may move the coordinates of the text to a display area not being a palm touch area of a display, thereby allowing a user to view the text conveniently. Alternatively, when all of the text is not displayed on an activated display area, the display control module or the controller 130 may adjust the size of the text. The function object may be, for example, an application icon, a short cut icon, or the like.

According to various embodiments of the present disclosure, the display control module or the controller 130 may temporarily apply the rearranged screen layout while the palm touch input is maintained. Since the rearranged screen layout need not be maintained if a palm touch input is released, the display control module or the controller 130 may allow the rearranged screen layout to return to a state before the palm touch input is received.

According to various embodiments of the present disclosure, when the user input is sensed at a specific area of at least one of the first display 10 and the second display 20, the display control module or the controller 130 may inactivate a touch input on the whole area of at least one display, at which the touch input is sensed, of the first display 10 and the second display 20. For example, the specific area may be an object displayed on one of the first display 10 and the second display 20. For example, a touch input on a display at which the touch input is sensed may be inactivated when a user touches an icon or a button displayed on at least one of the first display 10 and the second display 20.

According to various embodiments of the present disclosure, when the user input is a touch input that is repetitively received on more than a specific number of occasions from at least one of the first display 10 and the second display 20, the display control module or the controller 130 may inactivate a touch input on the whole area of at least one display, at which the touch input is not sensed, of the first display 10 and the second display 20. For example, the specific area may be a display area where a touch input is repetitively received. For example, the specific area may be a QUERTY keyboard (i.e. a virtual keyboard), a keypad, a game pad icon, or the like. When a user is repetitively inputting through a quad keyboard, a keypad, a game pad icon, or the like, the display control module or the controller 130 may inactivate a display at which a touch input is not sensed, as a consequence of determining that a remaining display(s) is not used mutually exclusively. The display control module or the controller 130 may automatically inactivate a display based on a specific user input, thereby improving the convenience of a user.

According to various embodiments of the present disclosure, when the user input includes a boundary between the first display 10 and the second display 20, the display control module or the controller 130 may temporarily inactivate a touch input on the whole area of one display, having a relatively low touched-area ratio, from among the first display 10 and the second display 20.

For example, in a case where at least a portion of the first display 10 and at least a portion of the second display 20 are simultaneously touched, the display control module or the controller 130 may determine a display with a relatively high touched-area ratio as a display through which a user has intention of inputting a touch. The display control module or the controller 130 may temporarily inactivate a touch input on a display (a display determined as a display through which a user has no intention of inputting a touch) with a relatively low touched-area ratio. Accordingly, even though at least a portion of the first display 10 and at least a portion of the second display 20 are simultaneously touched, the display control module or the controller 130 may quickly determine an intention of a user, thereby making it possible to process a touch input of the user quickly.

According to various embodiments of the present disclosure, in a case where the user input is associated with a function object placed on at least one of the first display 10 and the second display 20, the display control module or the controller 130 may inactivate a touch input on the whole area of at least one display, not including the function object, of the first display 10 and the second display 20.

For example, even though at least a portion of the first display 10 and at least a portion of the second display 20 are simultaneously touched, the display control module or the controller 130 may determine a display including the touched function object as a display through which a user has intention of inputting a touch, when a function object included in at least one of the first display 10 and the second display 20 is touched. The display control module or the controller 130 may temporarily inactivate a touch input on a display (a display determined as a display through which a user has no intention of inputting a touch) that does not include a function object. Accordingly, even though at least a portion of the first display 10 and at least a portion of the second display 20 are simultaneously touched, the display control module or the controller 130 may determine an intention of a user to process a touch input of the user.

According to various embodiments of the present disclosure, the display control module or the controller 130 may not apply the inactivation if a touched area of the function object is smaller in dimension than a specific area. Even though a function object included in at least one of the first display 10 and the second display 20 is touched, the display control module or the controller 130 may determine a touch input through a function object as being unintended, when a touched area of the function object is smaller in dimension than a specific area. In this case, the display control module or the controller 130 may temporarily inactivate a touch input on a display (a display determined as a display through which a user has no intention of inputting a touch) including a function object.

According to various embodiments of the present disclosure, when the user input is associated with a scroll input for scrolling at least one object displayed on at least one of the first display 10 and the second display 20, the display control module or the controller 130 may process the touch input as a scroll input on an object of a first touched display, even though the touch input goes over to another display from the first touched display. The display control module or the controller 130 may inactivate a touch input on a remaining display(s) until the touch input is released.

For example, when the user input is a scroll input for moving a scroll (e.g., an index scroll or a scroll bar) placed on a boundary where the first display 10 and the second display 20 are in contact with each other, the display control module or the controller 130 may determine a touch input on the scroll as being continuous, even though the touch input goes over to another display from a first touched display. The display control module or the controller 130 may determine a display, which is first touched for a touch input, as a display through which a user has intention of inputting a touch and may inactivate a touch input on a remaining display(s) not being the first touched display until the touch input is released.

Alternatively, when the user input is a scroll input for scrolling a list placed on the first display 10, the display control module or the controller 130 may determine a touch input on the list as being continuous, even though the touch input goes over to another display from a first touched display. The display control module or the controller 130 may determine a display, which is first touched for a touch input, as a display through which a user has intention of inputting a touch and may inactivate a touch input on a remaining display(s) not being the first touched display until the touch input is released.

According to various embodiments of the present disclosure, when the user input corresponds to a scroll input for scrolling at least one object displayed on at least one of the first display 10 and the second display 20 and goes over to another display from a first touched display, the display control module or the controller 130 may inactivate a touch input on the whole area of a remaining display(s) not being the first touched display.

For example, when a scroll input for scrolling an object of a first touched display goes over to another display from the first touched display, the display control module or the controller 130 may determine a touch input on the first touched display as being released. When the scroll input gets out of the first touched display, the display control module or the controller 130 may determine a scroll input of a user as having ended and may terminate the scroll input. Accordingly, there may be inactivated a touch input on a remaining display(s) not being the first touched display. For example, in a case where the user input is a scroll input for scrolling a list placed on the first display 10, the display control module or the controller 130 may determine a touch input on the list as having ended, when the touch input goes over to another display from the first touched display, to thus stop scrolling the list, and may inactivate a touch input on a remaining display(s) not being the first touched display.

According to various embodiments of the present disclosure, in a case where the user input is generated in at least one of the first display 10 and the second display 20 and then is dragged to another display, the display control module or the controller 130 may process the touch input as a touch input of the first touched display. The display control module or the controller 130 may determine a touch input on the first touched display as being continuous and may inactivate a touch input of a remaining display(s) until the touch input is released.

For example, in a case where the user input is a drag input for dragging an object placed on the second display 20, the display control module or the controller 130 may be determine a drag input on the object as being continuous, even though the touch input goes over to another display from the first touched display, and may inactivate a touch input of a remaining display(s) not being the first touched display until the drag input is released.

According to various embodiments of the present disclosure, the electronic device 100 may further include a sensor module 140. The sensor module 140 may sense (or detect) directivity of the electronic device 100. For example, the sensor module 140 may detect directivity (e.g. orientation, rotation of the electronic device 100, etc.) of the electronic device 100 using a gyro sensor, a magnetic sensor, an acceleration sensor, and the like.

FIG. 2 is a block diagram schematically illustrating an electronic device according to an embodiment of the present disclosure.

Referring to FIG. 2, an electronic device 200 is illustrated, where the electronic device 200 may contain a display module 210, an input interface 220, and a display control module or a controller 230. The display module 210 according to an embodiment of the present disclosure may include a first display panel 211 and a second display panel 212. The electronic device 200 according to various embodiments of the present disclosure may further include a sensor module 240.

In comparison with the display module 110 of FIG. 1, the display module 210 of the electronic device 200 according to an embodiment of the present disclosure may be illustrated as including a plurality of displays formed of separate display panels, respectively.

The display module 210 may include two segmented display areas: a first display 10; and a second display 20. Referring to FIG. 2, the display module 210 may display an object on the first display 10 that is defined at the first display panel 211 and may display an object on the second display 20 that is defined at the second display panel 212. However, the scope of the present disclosure may not be limited thereto. For example, areas of the first and second displays 10 and 20 may be variously changeable by a user or a firmware update.

The input interface 220, the display control module or the controller 230, and the sensor module 240 illustrated in FIG. 2 may respectively correspond to the input interface 120, the display control module or the controller 130, and the sensor module 140 illustrated in FIG. 1, and a duplicated description is thus omitted.

The display module 210 may include the first display 10 and the second display 20 corresponding to a display area. The display module 210 may display an object on the first display 10 that is defined at the first display panel 211 and may display an object on the second display 20 that is defined at the second display panel 212. However, the scope of the present disclosure may not be limited thereto.

For example, in the display module 210, the first display panel 211 may be a flat display panel, and the second display panel 212 may be a flexible display panel. As another example, the first display panel 211 may be a display panel placed at a front surface of the electronic device 200, and the second display panel 212 may be a display panel disposed at a side surface thereof. However, the scope of the present disclosure may not be limited thereto. For example, the first display panel 211 and the second display panel 212 of the display module 210 may be disposed in various forms.

The display module 210 may display information that the electronic device 200 processes. The display module 210 may output various objects, such as an icon, a menu, an image, a text, a list, a scroll, and the like, to at least one of the first display 10 and the second display 20.

According to various embodiments of the present disclosure, the first display panel 211 and the second display panel 212 of the display module 210 may be implemented with a display device, such as a touch screen, an LCD, a TFT-LCD, an OLED, a flexible display, a 3D display, or the like.

The first display panel 211 and the second display panel 212 may be controlled by one display control module 230.

FIG. 3 is a block diagram schematically illustrating an electronic device according to an embodiment of the present disclosure.

Referring to FIG. 3, an electronic device 300 is illustrated, where the electronic device 300 may contain a display module 310, an input interface 320, and a display control module or a controller 330. The display module 310 according to an embodiment of the present disclosure may include a first display panel 311 and a second display panel 312, and the display control module or the controller 330 may contain a first display control module or a first controller 331 and a second display control module or a second controller 332. The electronic device 300 according to various embodiments of the present disclosure may further include at least one of a sensor module 340 and a control module 350.

A description will be given as the display module 310 of the electronic device 300 according to an embodiment of the present disclosure may include a plurality of displays, which correspond to separate display panels, respectively. As compared with FIG. 2, a plurality of display panels of the display module 310 illustrated in FIG. 3 may be controlled by a plurality of display control modules (e.g., the first display control module or the first controller 331 and the second display control module or the second controller 332), respectively.

The display module 310 may include two segmented display areas: a first display 10; and a second display 20. Referring to FIG. 3, the display module 310 may display an object on the first display 10 that is defined at the first display panel 311 and may display an object on the second display 20 that is defined at the second display panel 312. However, the scope of the present disclosure may not be limited thereto. For example, areas of the first and second displays 10 and 20 may be variously changeable by a user or a firmware update. The first display panel 311 may be controlled by the first display control module or the first controller 331, and the second display panel 312 may be controlled by the second display control module or the second controller 332.

The input interface 320 and the sensor module 340 illustrated in FIG. 3 may respectively correspond to the input interface 120 and the sensor module 140 illustrated in FIG. 1, and a duplicated description thereof is thus omitted.

The display module 310 may include the first display 10 and the second display 20 corresponding to a display area. The display module 310 may display an object on the first display 10 that is defined at the first display panel 311 and may display an object on the second display 20 that is defined at the second display panel 312.

For example, in the display module 310, the first display panel 311 may be a flat display panel, and the second display panel 312 may be a flexible display panel. As another example, the first display panel 311 of the display module 310 may be a display panel placed at a front surface of the electronic device 300, and the second display panel 312 thereof may be a display panel disposed at a side surface thereof. However, the scope of the present disclosure may not be limited thereto. For example, the first display panel 311 and the second display panel 312 of the display module 310 may be disposed in various forms.

The display module 310 may display information that the electronic device 300 processes. The display module 310 may output various objects, such as an icon, a menu, an image, a text, a list, a scroll, and the like, to at least one of the first display 10 and the second display 20.

According to various embodiments of the present disclosure, the first display panel 311 and the second display panel 312 of the electronic device 300 may be implemented with a display device, such as a touch screen, an LCD, a TFT-LCD, an OLED, a flexible display, a 3D display, or the like.

The first display panel 311 and the second display panel 312 may be controlled by the first display control module or the first controller 331 and the second display control module or the second controller 332, respectively.

The display control module or the controller 330 may include the first display control module or the first controller 331 and the second display control module or the second controller 332. The first display control module or the first controller 331 may control the first display panel 311. The second display control module or the second controller 332 may control the first display panel 311. The display control module or the controller 331 and the second display control module or the second controller 332 may be included within one Integrated Circuit (IC) or an IC package.

Since the display control module or the controller 330 is the same as display control modules 130 and 230 illustrated in FIGS. 1 and 2, except the display module 310 is controlled through the first display control module or the first controller 331 and the second display control module or the second controller 332, the description given in FIGS. 1 and 2 with regard to the display control module or the controllers 130 and 230 may be applied to the display control module or the controller 330 illustrated in FIG. 3. With regard to this, a duplicated description may be thus omitted.

According to various embodiments of the present disclosure, the electronic device 300 may further include the control module 350. For example, the display control module or the controller 330 may control the display module 310 in response to a signal directly provided from the input interface 320 and/or the sensor module 340. Alternatively, the display control module or the controller 330 may control the display module 310 in response to a control signal from the control module 350 that receives a signal from the input interface 320 or the sensor module 340.

Various embodiments of the present disclosure are exemplified as the display control module or the controllers 130 and 230 illustrated in FIGS. 1 and 2 control display modules 110 and 210 in response to signals directly provided from input interfaces 120 and 220 or sensor modules 140 and 240. However, according to various embodiments of the present disclosure, the display control module or the controllers 130 and 230 illustrated in FIGS. 1 and 2 may control the display modules 110 and 210 in response to control signals from separate control modules that receive signals from the input interfaces 120 and 220 or the sensor modules 140 and 240.

The control module 350 may control an overall operation of the electronic device 300 including an operation of the input interface 320, the display control module or the controller 330, and/or the sensor module 340. For example, the control module 350 may correspond to an application processor (AP).

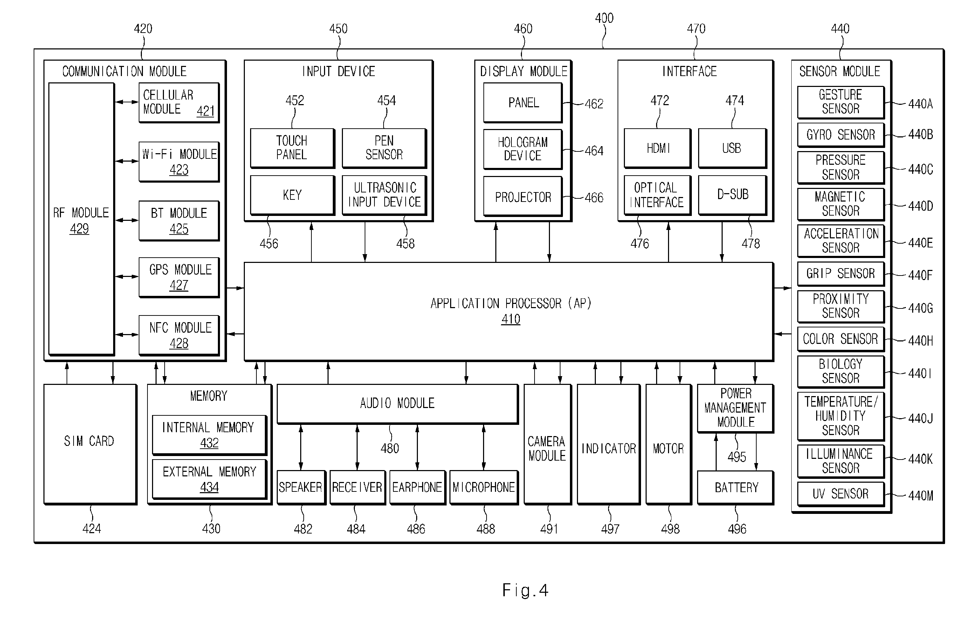

FIG. 4 is a block diagram illustrating an electronic device according to an embodiment of the present disclosure.

Referring to FIG. 4, an electronic device 400 device is illustrated, where the electronic device 400 may include a part or all of components of one of electronic devices 100, 200, and 300 shown in FIGS. 1, 2, and 3.

Specifically, the electronic device 400 may include one or more application processors (AP) 410, a communication module 420, a subscriber identification module (SIM) card 424, a memory 430, a sensor module 440, an input device 450, a display module 460, an interface 470, an audio module 480, a camera module 491, a power management module 495, a battery 496, an indicator 497, and a motor 498.

The AP 410 (e.g., the control module 350 illustrated in FIG. 3) may drive an operating system (OS) or an application to control a plurality of hardware or software components connected to the AP 410 and may process and compute a variety of data including multimedia data. The AP 410 may be implemented with a System on Chip (SoC), for example. According to an embodiment of the present disclosure, the AP 410 may further include a graphic processing unit (GPU) (not illustrated).

The communication module 420 may transmit and receive data when there are conveyed communications between other electronic devices connected with the electronic device 400 through a network. According to an embodiment of the present disclosure, the communication module 420 may include a cellular module 421, a wireless-fidelity (Wi-Fi) module 423, a Bluetooth (BT) module 425, a GPS module 427, a near field communication (NFC) module 428, and a radio frequency (RF) module 429.

The cellular module 421 may provide voice communication, video communication, a character service, an Internet service, and the like through a communication network (e.g., an Long Term Evolution (LTE), an LTE-Advanced (LTE-A), a Code Division Multiple Access (CDMA), a Wideband CDMA (WCDMA), a Universal Mobile Telecommunications System (UMTS), a Wireless Broadband (WiBro), a Global System for Mobile Communications (GSM), or the like). Also, the cellular module 421 may perform discrimination and authentication of an electronic device within a communication network using a SIM (e.g., the SIM card 424), for example. According to an embodiment of the present disclosure, the cellular module 421 may perform at least a portion of functions that the AP 410 provides. For example, the cellular module 421 may perform at least a portion of a multimedia control function.

According to an embodiment of the present disclosure, the cellular module 421 may include a communication processor (CP). Furthermore, the cellular module 421 may be implemented with, for example, a SoC. Although components such as the cellular module 421 (e.g., a communication processor), the memory 430, the power management module 495, and the like are illustrated as being components independent of the AP 410, the AP 410 according to an embodiment of the present disclosure may be implemented to include at least a portion (e.g., a cellular module 421) of the above components.

According to an embodiment of the present disclosure, the AP 410 or the cellular module 421 (e.g., a communication processor) may load and process an instruction or data received from nonvolatile memories respectively connected thereto or from at least one of other elements at the nonvolatile memory. Also, the AP 410 or the cellular module 421 may store data received from at least one of other elements or generated by at least one of other elements at a nonvolatile memory.

Each of the Wi-Fi module 423, the BT module 425, the GPS module 427, and the NFC module 428 may include a processor for processing data exchanged through a corresponding module, for example. Referring to FIG. 4, the cellular module 421, the Wi-Fi module 423, the BT module 425, the GPS module 427, and the NFC module 428 may be illustrated as being separate blocks, respectively. According to an embodiment of the present disclosure, at least a portion (e.g., two or more components) of the cellular module 421, the Wi-Fi module 423, the BT module 425, the GPS module 427, and the NFC module 428 may be included within one IC or an IC package. For example, at least a portion (e.g., a communication processor corresponding to the cellular module 421 and a Wi-Fi processor corresponding to the Wi-Fi module 423) of communication processors corresponding to the cellular module 421, the Wi-Fi module 423, the BT module 425, the GPS module 427, and the NFC module 428 may be implemented with one SoC.

The RF module 429 may transmit and receive data, for example, an RF signal. Although not illustrated, the RF module 429 may include a transceiver, a power amplifier module (PAM), a frequency filter, or low noise amplifier (LNA). Furthermore, the RF module 429 may further include a conductor and/or a conducting wire for transmitting and receiving an electromagnetic wave in a space in wireless communication. Referring to FIG. 4, the cellular module 421, the Wi-Fi module 423, the BT module 425, the GPS module 427, and the NFC module 428 may be illustrated as sharing one RF module 429, but according to an embodiment of the present disclosure, at least one of the cellular module 421, the Wi-Fi module 423, the BT module 425, the GPS module 427, or the NFC module 428 may transmit and receive an RF signal through a separate RF module.

The SIM card 424 may be a card that includes a subscriber identification module and may be inserted to a slot formed at a specific position of the electronic device 400. The SIM card 424 may include unique identify information (e.g., integrated circuit card identifier (ICCID)) or subscriber information (e.g., integrated mobile subscriber identity (IMSI)). The SIM card 424 may store an application and the like that are received from an external device and are installed and may store an app icon of the application. The SIM card 424 may store an icon, which is bookmarked by a user, from among the app icon and a symbol icon.

The memory 430 may include an internal memory 432 and/or an external memory 434. For example, the internal memory 432 may include at least one of a volatile memory (e.g., dynamic random access memory (DRAM), static RAM (SRAM), synchronous dynamic RAM (SDRAM), etc.), and/or a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a Not AND (NAND) flash memory, or a Not OR (NOR) flash memory). The memory 430 may store an application and the like that are received from an external device and are installed and may store an app icon of the application. The memory 430 may store an icon, which is bookmarked by a user, from among the app icon and a symbol icon.

According to an embodiment of the present disclosure, the internal memory 432 may be a solid state drive (SSD). The external memory 434 may include a flash drive, for example, compact flash (CF), secure digital (SD), micro secure digital (Micro-SD), mini secure digital (Mini-SD), extreme digital (xD) and/or a memory stick. The external memory 434 may be functionally connected with the electronic device 400 through various interfaces. According to an embodiment of the present disclosure, the electronic device 400 may further include a storage device (or storage medium) such as a hard disk drive.

The sensor module 440 (e.g., the sensor module 140 illustrated in FIG. 1) may measure a physical quantity or may detect an operation state of the electronic device 400. The sensor module 440 may convert the measured or detected information to an electric signal. The sensor module 440 may include at least one of a gesture sensor 440A, a gyro sensor 440B, a pressure sensor 440C, a magnetic sensor 440D, an acceleration sensor 440E, a grip sensor 440F, a proximity sensor 440G, a color sensor 440H (e.g., red, green, blue (RGB) sensor), a biology sensor 440I, a temperature/humidity sensor 440J, an illuminance sensor 440K, and/or an ultraviolet (UV) sensor 440M.

Additionally or generally, although not illustrated, the sensor module 440 may further include, for example, an E-nose sensor, an electromyography sensor (EMG) sensor, an electroencephalogram (EEG) sensor, an electrocardiogram (ECG) sensor, a photoplethysmographic (PPG) sensor, an infrared (IR) sensor, an iris sensor, a fingerprint sensor, and the like. The sensor module 440 may further include a control circuit for controlling at least one or more sensors included therein. The sensor module 440 may sense (or detect) directivity of the electronic device 400 using the gyro sensor 440B and the like, and may convert information about the sensed directivity into an electrical signal to provide it to the AP 410.

The input device 450 (e.g., the input interface 120 illustrated in FIG. 1) may include a touch panel 452, a (digital) pen sensor 454, a key 456, and/or an ultrasonic input device 458. The touch panel 452 may recognize a touch input using at least one of capacitive, resistive, infrared and ultrasonic detecting methods. Also, the touch panel 452 may further include a control circuit. In a case of using the capacitive detecting method, a physical contact or proximity recognition is possible. The touch panel 452 may further include a tactile layer. In this case, the touch panel 452 may provide a tactile reaction to a user. The touch panel 452 may generate a touch event associated with execution of a specific function using position associated information.

The (digital) pen sensor 454 may be implemented in a similar or same manner as the method of receiving a touch input of a user or may be implemented using an additional sheet for recognition. The key 456 (e.g., the input interface 120) may include, for example, a physical button, an optical key, or a keypad. The ultrasonic input device 458, which is an input device for generating an ultrasonic signal, may enable the electronic device 400 to sense detect a sound wave so as to identify data, wherein the ultrasonic input device 458 is capable of wireless recognition. According to an embodiment of the present disclosure, the electronic device 400 may use the communication module 420 so as to receive a user input from an external device (e.g., a computer or server) connected to the communication module 420.

The display module 460 may include a panel 462, a hologram device 464, and/or a projector 466. According to an embodiment of the present disclosure, the display module 460 may include a control circuit for controlling the panel 462, the hologram device 464, and/or the projector 466. The panel 462 may be an LCD or an active-matrix organic light-emitting diode (AMOLED). The panel 464 may be, for example, flexible, transparent or wearable. The panel 464 and the touch panel 452 may be integrated into a single module. The hologram device 464 may display a stereoscopic image in a space using a light interference phenomenon. The projector 466 may project light onto a screen so as to display an image. The screen may be arranged in the inside or the outside of the electronic device 400. The display module 460 may further include a control circuit for controlling the panel 462, the hologram device 464, and/or the projector 466. Under a control of the AP 410, the display module 460 may output an execution screen about a function that is being executed on a first output area may output items, such as an icon, a menu, a text, and the like, on a second output area. Herein, the icon of the items may an attribute control icon associated with a specific function for providing an execution screen, an app icon associated with an application, a symbol icon associated with a web site, or a state icon associated with an indicator. The menu of the items may be a zoom control of image data, a volume control of sound data, or the like, and the text thereof may be a text including a notification message about an operation of a previously installed application, a web URL address, or the like.

The interface 470 may include, for example, a high-definition multimedia interface (HDMI) 472, a universal serial bus (USB) 474, an optical interface 476, and/or a D-sub (D-subminiature) 478. Additionally or generally, the interface 470 may include, for example, a mobile high definition link (MHL) interface, a SD card/multi-media card (MMC) interface, or an infrared data association (IrDA) standard interface.

The audio module 480 may convert a sound and an electric signal in dual directions. The audio module 480 may process, for example, sound information that is input or output through a speaker 482, a receiver 484, an earphone 486, and/or a microphone 488.

According to an embodiment of the present disclosure, the camera module 491 for shooting a still image or a video may include at least one image sensor (e.g., a front sensor or a rear sensor), a lens (not illustrated), an image signal processor (ISP, not illustrated), and/or a flash (e.g., a Light Emitting Diode (LED) or a xenon lamp, not illustrated).

The power management module 495 may manage power of the electronic device 400. Although not illustrated, the power management module 495 may include, for example, a power management integrated circuit (PMIC) a charger IC, or a battery or fuel gauge.

The PMIC may be mounted on an IC or a SoC semiconductor. A charging method may be classified into a wired charging method and a wireless charging method. The charger IC may charge a battery, and may prevent an overvoltage or an overcurrent from being introduced from a charger. According to an embodiment of the present disclosure, the charger IC may include a charger IC for at least one of the wired charging method and the wireless charging method. The wireless charging method may include, for example, a magnetic resonance method, a magnetic induction method or an electromagnetic method, and may include an additional circuit, for example, a coil loop, a resonant circuit, or a rectifier, and the like.

A battery gauge may measure, for example, a remaining capacity of the battery 496 and a voltage, current or temperature thereof while the battery is charged. The battery 496 may store or generate electricity, and may supply power to the electronic device 400 using the stored or generated electricity. The battery 496 may include, for example, a rechargeable battery or a solar battery.

The indicator 497 may display a specific state of the electronic device 400 or a part thereof (e.g., the AP 410), such as a booting state, a message state, a charging state, and the like. The motor 498 may convert an electrical signal into a mechanical vibration. Although not illustrated, a processing device (e.g., a GPU) for supporting a mobile TV may be included in the electronic device 400. The processing device for supporting a mobile TV may process media data according to the standards of digital multimedia broadcasting (DMB), digital video broadcasting (DVB) and/or media flow.

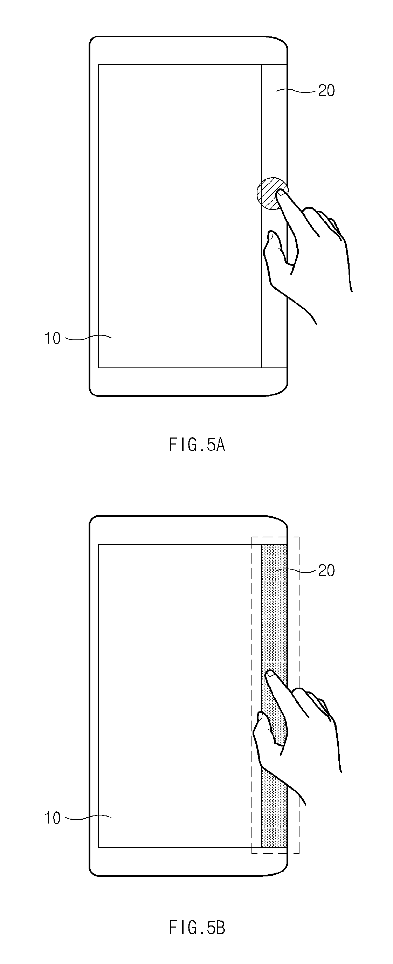

FIGS. 5A and 5B illustrate screens indicating an operation for inactivating at least one display when an electronic device receives a specific touch input, according to various embodiments of the present disclosure.

Referring to FIGS. 5A and 5B, a first display 10 and a second display 20 are illustrated, where a user may provide or enter a touch input on the second display 20.

When the touch input is sensed (or detected) in a specific touch manner, as illustrated in FIG. 5B, the display control module or the controller 130, as illustrated in FIG. 1, may inactivate a touch input to be provided to the whole area (a shaded portion) of the second display 20. Inactivation of the touch input may be inactivation of a function that is used to receive the touch input and corresponds to the touch input. An area where a touch input is inactivated may be illustrated by shade. The inactivated second display 20 may maintain a display state (an on or off state) before being inactivated.

For example, the specific touch manner may be a long press in which a touch input is retained over a threshold time. The scope of the present disclosure may not be limited thereto, and may include various touch inputs, such as a tap, a double tap, a swipe and hold, and the like.

According to various embodiments of the present disclosure, when a touch input according to the specific touch manner is sensed after a touch input on the second display 20 is inactivated, a display control module or a controller 130 may again activate a touch input on the second display 20. For example, the specific touch manner may be the same as a touch manner in which a display is inactivated. Alternatively, the specific touch manner may be different from a touch manner in which a display is inactivated. That is, the display control module or the controller 130 may inactivate the display in response to a touch input for inactivating any one display. In this case, a display may be inactivated with respect to a touch input for activating the inactivated display, not all touch inputs.

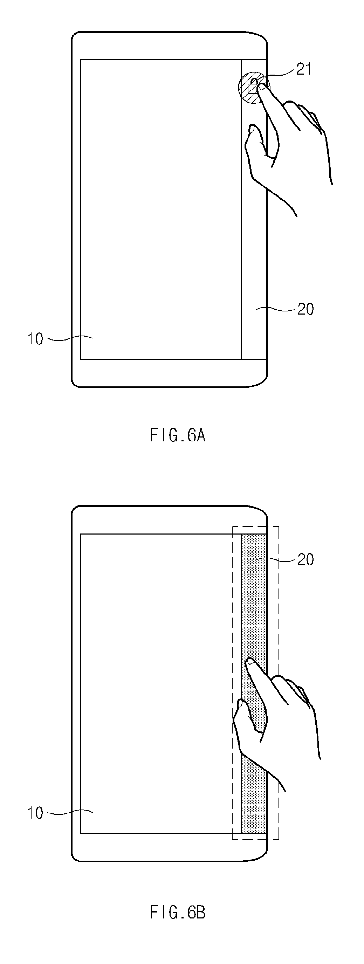

FIGS. 6A and 6B illustrate screens in which at least one segmented display is inactivated when an electronic device receives a specific touch input, according to various embodiments of the present disclosure.

Referring to FIGS. 6A and 6B, a first display 10 and a second display 20 are illustrated, where a user may enter (or provide) a touch input on a specific area 21 of the second display 20. For example, the specific area may be an object displayed on the second display 20. For example, the object may be an icon (e.g., a lock icon) or a button.

In a case where a touch input sensed at the second display 20 is a touch input on the specific area 21, as illustrated in FIG. 6B, the display control module or the controller 130 as illustrated in FIG. 1 may inactivate a touch input on the whole area (a shaded portion) of the second display 20 where the touch input is sensed. The whole area of the second display 20 may remain in an inactivated state. The inactivated second display 20 may maintain a display state (an on or off state) before inactivated.

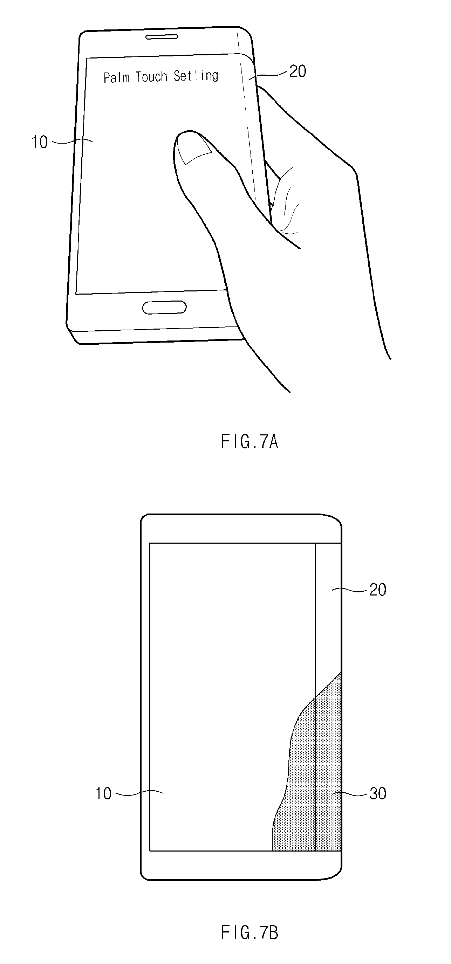

FIGS. 7A and 7B illustrate screens in which at least a portion of at least one segmented display is inactivated when a specific touch input is generated at an electronic device, according to various embodiments of the present disclosure.

Referring to FIGS. 7A and 7B, a first display 10 and a second display 20 are illustrated, where a user may provide or enter a palm touch input on an electronic device 100 as illustrated in FIG. 1. A touch input of the user may be recognized as a palm touch input based on a palm touch area 30. The palm touch area may be a specific area corresponding to at least a portion of the first display 10 and the second display 20.

For example, the palm touch area may be predetermined by a user through a palm touch setting mode. As illustrated in FIG. 7A, a user may hold an electronic device 100 and may repetitively provide a palm touch input by a specific count. The electronic device 100 may extract, as a palm touch area, an area touched in common on the first display 10 and/or the second display 20, based on the palm touch inputs repetitively provided. The palm touch area may be set using an algorithm or program for extracting a palm touch area. When a user input of the user is recognized as a palm touch input based on the palm touch area 30, a display control module or a controller 130 may inactivate a touch input provided on the first display 10 and/or the second display 20 set as the palm touch area 30.

As illustrated in FIG. 7B, when the user input is recognized as the palm touch input based on the palm touch area 30, the display control module or the controller 130 as illustrated in FIG. 1 may inactivate at least a portion (a shaded portion) of the first and second displays 10 and 20. For example, the inactivated first and second displays 10 and 20 may remain at a previous display state (an on or off state).

According to various embodiments of the present disclosure, when the palm touch input is released, the display control module or the controller 130 may release inactivation of a touch input with respect to the palm touch area 30. The inactivation of a touch input on the palm touch area 30 may be valid only if a palm touch input is maintained.

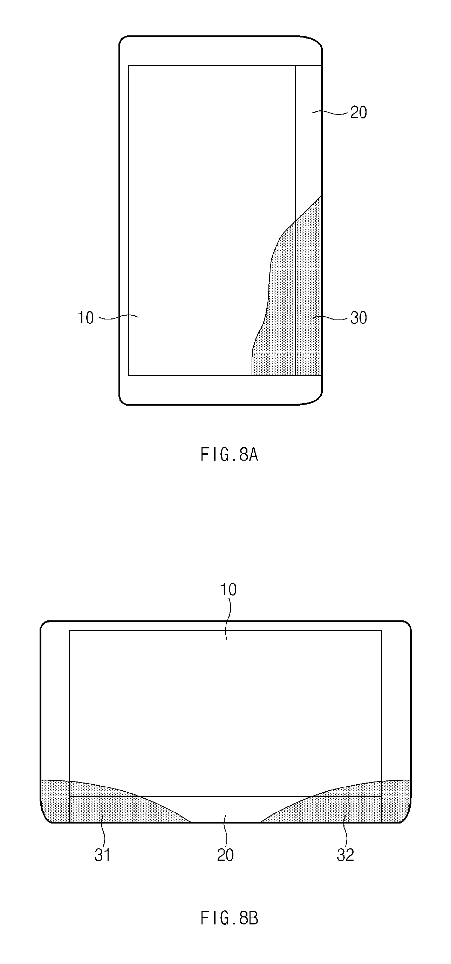

FIGS. 8A and 8B illustrate screens in which a palm touch area corresponding to at least a portion of at least one segmented display is inactivated based on a palm touch area according to an orientation of an electronic device, according to various embodiments of the present disclosure.

For example, the electronic device 100 as illustrated in FIG. 1 may detect whether the electronic device 100 has a portrait mode or a landscape mode, based on a posture of the electronic device 100. The electronic device 100 may set a palm touch area differently based on the detected display mode (e.g., directivity of an electronic device 100). When a touch input of a user is recognized as a palm touch input, the display control module or the controller 130 as illustrated in FIG. 1 may inactivate a touch input provided at an area on a display set as a palm touch area according to the sensed mode.

Referring to FIGS. 8A and 8B, a first display 10 and a second display 20 are illustrated, where the palm touch area may be at least a partial area of at least one of the first display 10 and/or the second display 20. FIG. 8A illustrates a palm touch area 30 when the electronic device 100 has the landscape mode. FIG. 8B illustrates palm touch areas 31 and 32 when the electronic device 100 has the portrait mode. As illustrated in FIGS. 8A and 8B, a palm touch area to be inactivated may vary with a display mode of the electronic device 100.

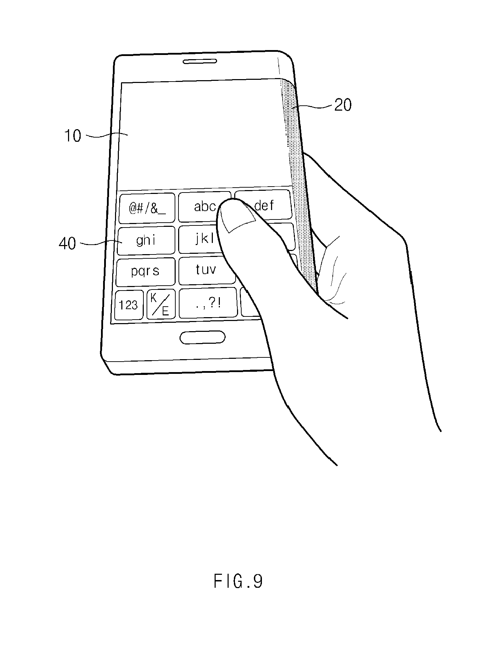

FIG. 9 illustrates a screen in which at least one segmented display is inactivated when a specific touch input is generated over a specific count at an electronic device, according to an embodiment of the present disclosure.

Referring to FIG. 9, a first display 10 and a second display 20 are illustrated, such that when a touch input is repetitively received by a specific count at a specific area of one of the first display 10 and/or the second display 20, the display control module or the controller 130 illustrated in FIG. 1 may inactivate a touch input on the whole area on at least one display, at which the touch input is not sensed, of the first display 10 and the second display 20.

The specific area may be an area 40 on a display through which a touch input is capable of being received repetitively. For example, the specific area may be an area corresponding to a quad keyboard, a keypad, a game pad icon, or the like. When a user is repetitively inputting a quad keyboard, a keypad, a game pad icon, or the like, the display control module or the controller 130 may inactivate a display where a touch input is not sensed, as a consequence of determining that a remaining display(s) is not used for a touch input.

As illustrated in FIG. 9, when a touch input is repetitively received over a specific count at the area 40 on the first display 10, the display control module or the controller 130 may inactivate a touch input on the whole area (a shaded portion) of the second display 20.

As such, the display control module or the controller 130 may automatically inactivate a display according to a specific user input, thereby improving convenience of a user.

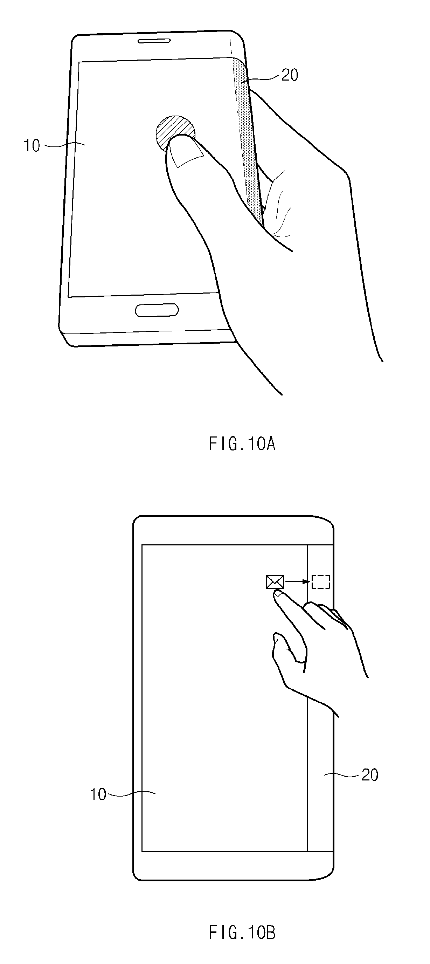

FIGS. 10A and 10B illustrate screens in which at least one segmented display is inactivated when a specific touch input is generated over a specific count at an electronic device, according to various embodiments of the present disclosure.

Referring to FIGS. 10A and 10B, a first display 10 and a second display 20 are illustrated, where a user may provide or enter a touch input in a specific touch manner. As illustrated in FIG. 10A, in a case where a touch input sensed at the first display is based on a specific touch manner, the display control module or the controller 130 as illustrated in FIG. 1 may inactivate a touch input on the whole area (a shaded portion) of the second display 20 where the touch input is not sensed.

For example, the specific touch manner may be a long press where a touch input is maintained over a specific time. The specific touch manner may not be limited to the long press, and may include various touch inputs, such as a tap, a double tap, a swipe and hold, and the like.

Referring to FIG. 10B, a user may enter a touch input to move an object from the first display 10 into the second display 20. Further, as illustrated in FIG. 10B, in a case where the user input corresponds to a touch input for moving an object displayed on the first display 10 and the second display 20 into the other display, the display control module or the controller 130 may not apply the inactivation. That is, the second display 20 may not be inactivated unlike FIG. 10A.

As such, the electronic device 100 as illustrated in FIG. 1 according to an embodiment of the present disclosure may inactivate a touch input on the whole area of a display where a touch input is not sensed, thereby improving convenience of a user.

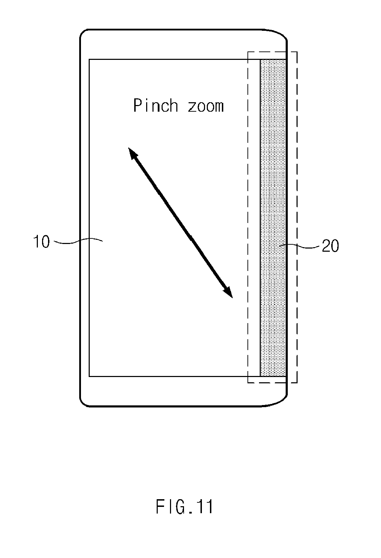

FIG. 11 illustrates a screen in which at least one segmented display is inactivated when a specific touch input is generated more than a specific number of times at an electronic device, according to an embodiment of the present disclosure.

Referring to FIG. 11, a first display 10 and a second display 20 are illustrated. In a case where a user input based on a specific touch manner is sensed on the first display 10, the display control module or the controller 130 illustrated in FIG. 1 may inactivate a touch input on the whole area of the second display 20 where the touch input is not sensed. For example, the specific touch manner may include various multi-touch inputs, such as pinch zoom-in/zoom-out and the like.

As illustrated in FIG. 11, the display control module or the controller 130 may inactivate a touch input on the whole area (a shaded portion) of the second display 20 when the touch input of the pinch zoom-out is sensed on the first display 10.

As such, the electronic device 100, as illustrated in FIG. 1, according to an embodiment of the present disclosure may inactivate a touch input on the whole area of the second display 20 where the touch input is not sensed, thereby improving convenience of a user.

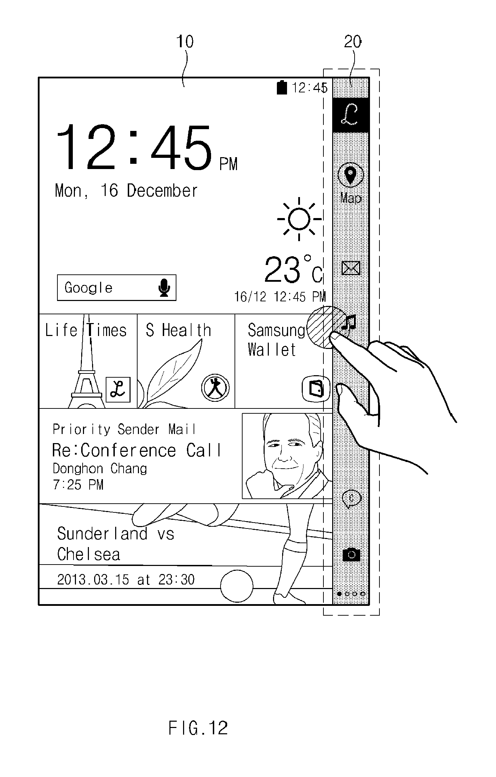

FIG. 12 illustrates a screen in which at least one segmented display is inactivated when a touch input is generated at a boundary where a plurality of displays of an electronic device are in contact with each other, according to an embodiment of the present disclosure.

Referring to FIG. 12, a first display 10 and a second display 20 are illustrated. In a case where a user input is sensed at a boundary where the first display 10 and the second display 20 are in contact with each other, the display control module or the controller 130, as illustrated in FIG. 1, may inactivate a touch input on a whole area of one display, having a relatively low touched-area ratio, from among the first display 10 and the second display 20.

Referring to FIG. 12, at least a portion of the first display 10 and at least a portion of the second display 20 are simultaneously touched. Hence, the display control module or the controller 130 may determine a display with a relatively high touched-area ratio as a display through which a user has intention to inputting a touch. Referring to FIG. 12, the touched area of the first display 10 may be larger than that of the second display 20. Accordingly, as illustrated in FIG. 12, the display control module or the controller 130 may temporarily inactivate a touch input on the whole area (a shaded portion) of the second display 20 with a relatively low touched-area ratio.

As such, even though at least a portion of the first display 10 and at least a portion of the second display 20 are simultaneously touched, the display control module or the controller 130 may determine intention of a user to process a touch input of the user.

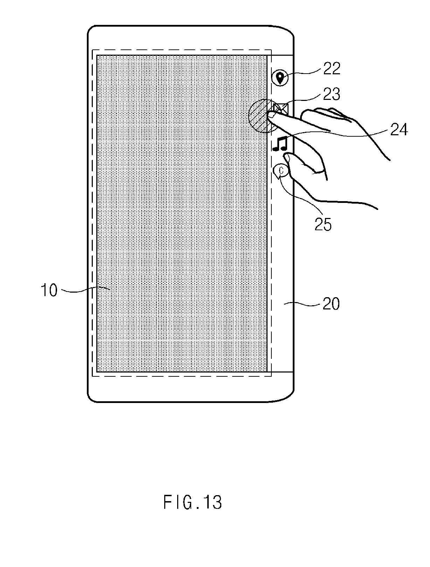

FIG. 13 illustrates a screen in which at least one segmented display is inactivated when a touch input is generated at a boundary where a plurality of displays of an electronic device are in contact with each other, according to an embodiment of the present disclosure.

Referring to FIG. 13, a first display 10 and a second display 20 are illustrated. In a case where a user input is sensed at a portion (or at least a portion) of a function object of the second display 20, the display control module or the controller 130, as illustrated in FIG. 1, may inactivate a touch input on a whole area of the first display 10 that does not include the function object.

For example, as illustrated in FIG. 13, even though at least a portion of the first display 10 and at least a portion of the second display 20 are simultaneously touched, the display control module or the controller 130 may determine the second display 20, including a touched function object 22, 23, 24, or 25, as a display through which a user intends to input a touch, when a function object 22, 23, 24, or 25 of the second display 20 is touched. Accordingly, as illustrated in FIG. 13, the display control module or the controller 130 may inactivate a touch input on the whole area (a shaded portion) of the first display 10 that does not include the function objects 22, 23, 24, and 25. As such, even though at least a portion of the first display 10 and at least a portion of the second display 20 are simultaneously touched, the display control module or the controller 130 may process a touch input of a user appropriately.

According to another embodiment of the present disclosure, the display control module or the controller 130 may not apply the inactivation when the dimensions of a touched-area of the function object 22, 23, 24, or 25 are smaller than those of a specific area. In a case where the function object 22, 23, 24, or 25 of the second display 20 is touched but touched-area dimensions thereof are smaller than the specific area dimensions, the display control module or the controller 130 may temporarily inactivate a touch input on the second display including the function objects 22, 23, 24, and 25, as a consequence of determining that a user has no intention of inputting a touch about the function objects 22, 23, 24, and 25.

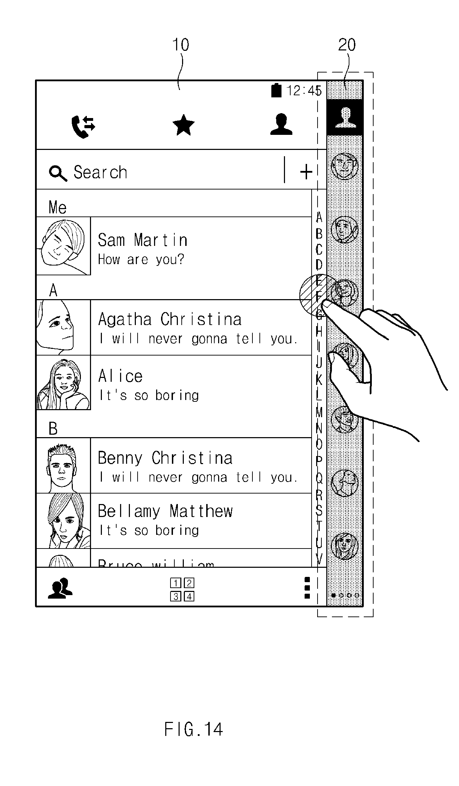

FIG. 14 illustrates a screen in which at least one segmented display is inactivated when a scroll input is generated at a boundary where a plurality of displays of an electronic device are in contact with each other, according to an embodiment of the present disclosure.

Referring to FIG. 14, a first display 10 and a second display 20 are illustrated. It may be assumed that a user input is a scroll input for scrolling at least one object displayed on the first display 10. Even though the touch input is dragged from the first display 10 that is first touched to the second display 20, the display control module or the controller 130, as illustrated in FIG. 1, may process the touch input as the scroll input on an object of the first display 10 where the user input is first touched and may inactivate a touch input of the second display 20 until the touch input is released.

As illustrated in FIG. 14, when the user input is the scroll input for moving an index scroll placed at a boundary where the first display 10 and the second display 20 are in contact with each other, the display control module or the controller 130 may determine a touch input on the index scroll as being continuous, even though the touch input goes over to the second display 20 from the first display 10 that is first touched. The display control module or the controller 130 may inactivate a touch input on the whole area (a shaded portion) of the second display 20, as illustrated in FIG. 14.

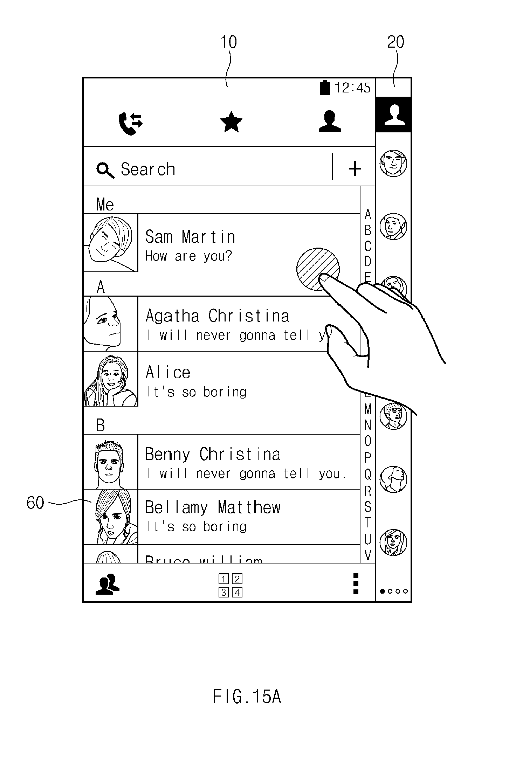

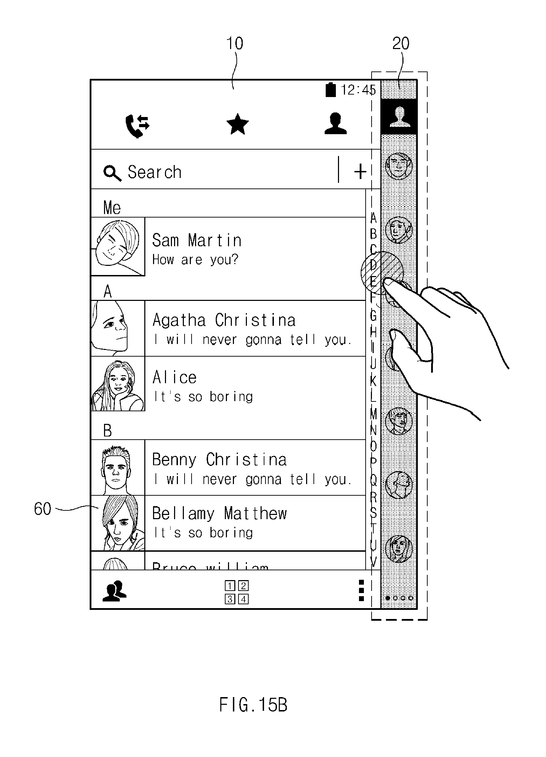

FIGS. 15A and 15B illustrate screens in which at least one segmented display is inactivated when a scroll input for scrolling an object displayed on at least one segmented display goes over to another segmented display, according to various embodiments of the present disclosure.

Referring to FIG. 15A, a first display 10 and a second display 20 are illustrated, where a user may be touching a list 60 of the first display 10. A user input may be a scroll input for scrolling a list placed on the first display 10. Besides, the user input may correspond to a scroll input for scrolling at least one object displayed on the first display 10.

According to an embodiment of the present disclosure, even though the touch input is dragged to the second display 20 from the first display 10 that is first touched, the display control module or the controller 130, as illustrated in FIG. 1, may determine the touch input on a list as being continuous.

Referring to FIG. 15B, a first display 10 and a second display 20 are illustrated, where the display control module or the controller 130, as illustrated in FIG. 1, may inactivate a touch input on a whole area (a shaded portion) of the second display 20, not the first display 10 that is first touched, until the touch input is released.

According to another embodiment of the present disclosure, when the touch input is dragged to the second display 20 from the first display 10 that is first touched, the display control module or the controller 130 may determine the touch input on the list 60 as having ended. When the touch input goes over to the second display 20 from the first display 10 that is first touched, the display control module or the controller 130 may terminate the scroll input as a consequence of determining that the touch input goes out of the first display 10 that is first touched. As illustrated in FIG. 15B, the display control module or the controller 130 may stop scrolling of the list and may inactivate a touch input on the second display 20, not the first display 10 that is first touched.

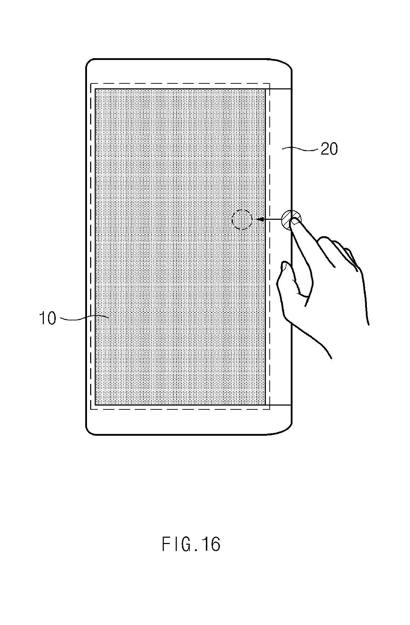

FIG. 16 illustrates a screen in which at least one segmented display is inactivated when a touch input starting from one display of an electronic device goes over to another display thereof, according to an embodiment of the present disclosure.

Referring to FIG. 16, a first display 10 and a second display 20 are illustrated, where a user input may be a touch input that continues from a position sensed at the second display 20 to another display (e.g., the first display 10). Even though the touch input is dragged to the first display 10 from the second display 20 that is first touched, the display control module or the controller 130, as illustrated in FIG. 1, may process the touch input as a touch input of the second display 20 that is first touched and may inactivate a touch input on a whole area (a shaded portion) of the first display 10 until the touch input is released.

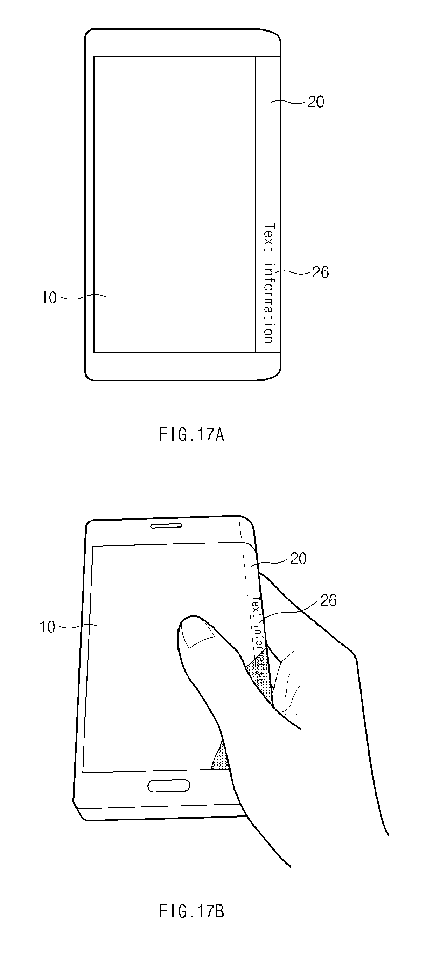

FIGS. 17A and 17B illustrate screens in which a screen layout of at least one segmented display is rearranged when an object is placed on a palm touch area of an electronic device, according to various embodiments of the present disclosure.

Referring to FIGS. 17A and 17B, a first display 10 and a second display 20 are illustrated. When an object is placed on the palm touch area, the display control module or the controller 130, as illustrated in FIG. 1, may rearrange a screen layout of a display on which the object is placed. The display control module or the controller 130 may rearrange a screen layout using at least one of a coordinate change of the object, a size control of the object, or a shape change of the object.

Referring to FIG. 17A, when an object 26 (e.g., a text) is placed on the palm touch area, the display control module or the controller 130 may rearrange a screen layout of a display where the object is placed.

Referring to FIG. 17B, when a text 26 is placed on the palm touch area (a shaded portion), the display control module or the controller 130 may shift a position of the text into a display area not being the palm touch area, thereby allowing a user to view the text conveniently. Alternatively, when it is impossible to display all of the text using an activated display area, the display control module or the controller 130 may adjust the size of the text.

According to still another embodiment of the present disclosure, when it is impossible to display all of a function object using an activated display area, the display control module or the controller 130 may change a shape of the function object or may hide a portion of the function object.

For example, the display control module or the controller 130 may apply the rearranged screen layout while the palm touch input is retained. When the palm touch input is released, it may be unnecessary to retain the rearranged screen layout; hence, the display control module or the controller 130 may change the rearranged screen layout so as to have a state before the palm touch input is received.

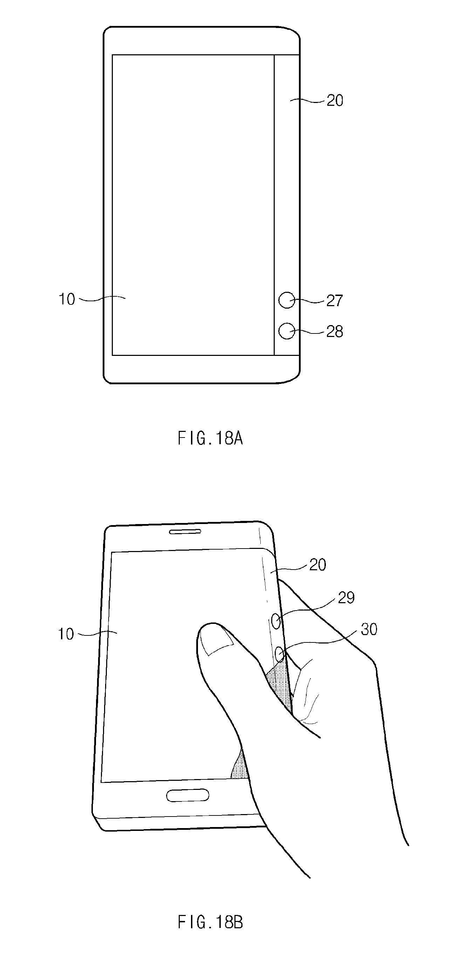

FIGS. 18A and 18B illustrate screens in which a screen layout of at least one segmented display is rearranged when an object is placed on a palm touch area of an electronic device, according to various embodiments of the present disclosure.

Referring to FIGS. 18A and 18B, a first display 10 and a second display 20 are illustrated. When an object is placed on a palm touch area, the display control module or the controller 130, as illustrated in FIG. 1, may rearrange a screen layout of a display on which the object is placed. The display control module or the controller 130 may rearrange a screen layout using at least one of a coordinate change of the object, a size control of the object, or a shape change of the object.

Referring to FIG. 18A, when objects 27 and 28 (e.g., an icon or a function object) are placed on the palm touch area, the display control module or the controller 130 may rearrange a screen layout of a display (e.g., the second display 20) where the objects 27 and 28 are placed.

Referring to FIG. 18B, when icons 29 and 30 are placed on the palm touch area (a shaded portion), the display control module or the controller 130 may shift positions of the icons 29 and 30 into a display area not inactivated, thereby allowing a user to use the icons 29 and 30. Alternatively, when it is impossible to display all of icons using an activated display area, the display control module or the controller 130 may hide all or some of the icons that cannot be displayed.

According to still another embodiment of the present disclosure, when it is impossible to display all of a function object using an activated display area, the display control module or the controller 130 may change a shape of the function object or may hide a portion of the function object.

For example, the display control module or the controller 130 may apply the rearranged screen layout while the palm touch input is retained. When the palm touch input is released, it may be unnecessary to retain the reconfigured screen layout; hence, the display control module or the controller 130 may change the reconfigured screen layout so as to have a state before the palm touch input is received.

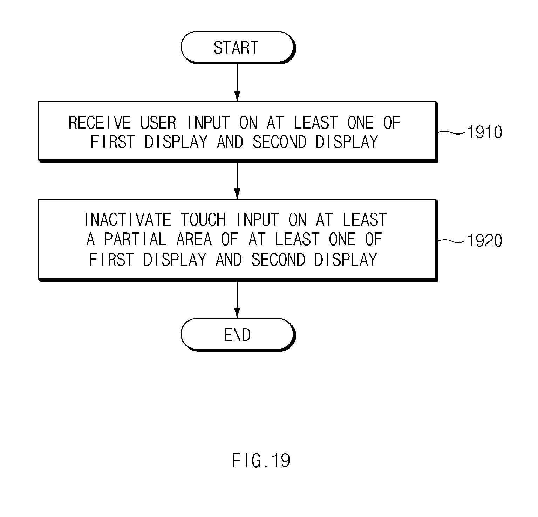

FIG. 19 is a flow chart illustrating a display controlling method of an electronic device according to an embodiment of the present disclosure.

Referring to FIG. 19, a display controlling method is illustrated, where the display control method may include operations processed by the electronic devices 100, 200, 300, and 400 illustrated in FIGS. 1, 2, 3, and 4. Even though omitted in this description, the above-described contents about the electronic devices 100, 200, 300, and 400 illustrated in FIGS. 1 to 4 may be applied to the method illustrated in FIG. 19.

Referring to FIG. 19, in operation 1910, a display control module or a controller may receive a user input on at least one of a first display and a second display of an electronic device.

Furthermore, in operation 1920, the display control module or the controller may inactivate a touch input on at least a partial area of at least one of the first display and the second display, based on the user input.

According to various embodiments of the present disclosure, the display controlling method may include receiving a user input on at least one of a first display and a second display of an electronic device, and inactivating a touch input on at least a partial display area of at least one of the first display and the second display, based on a kind of the user input.

According to various embodiments of the present disclosure, the inactivating of a touch input may include inactivating a touch input on the whole area of at least one display, at which the touch input is sensed, of the first display and the second display when the user input is based on a specific touch manner and is sensed at one of the first and second displays.

According to various embodiments of the present disclosure, the inactivating of a touch input may include inactivating a touch input on at least one display, at which a touch input is not sensed, of the first display and the second display when the user input is based on a specific touch manner and is sensed at one of the first and second displays.

According to various embodiments of the present disclosure, the display controlling method may include activating, if a touch input corresponding to a specific touch manner is sensed at an inactivated display after a touch input on at least one of the first display and the second display is inactivated, a touch input on the inactivated display.

According to various embodiments of the present disclosure, the display controlling method may not apply inactivation of the touch input when the user input corresponds to a touch input for shifting an object, displayed on at least one of the first display and the second display, into the other display.

According to various embodiments of the present disclosure, the inactivating of a touch input may include inactivating a touch input on a display area set as a palm touch area when the user input is recognized as a palm touch input on the palm touch area set with at least a partial display area of at least one of the first display and the second display.

According to various embodiments of the present disclosure, the display controlling method may include releasing inactivation of a touch input on the palm touch area when the palm touch input is released.

According to various embodiments of the present disclosure, the display controlling method may further include sensing a directivity of the electronic device, and may inactivate a touch input on a palm touch area corresponding to the sensed directivity when the user input is recognized as a palm touch input based on a palm touch area corresponding to the sensed directivity. For example, the palm touch area may be at least a partial display area, set based on the directivity of the electronic device, of at least one of the first display and the second display.

According to various embodiments of the present disclosure, the display controlling method may include rearranging a screen layout of at least one display, at which an object is placed, of the first display and the second display when the object is placed at the palm touch area.

According to various embodiments of the present disclosure, in the display controlling method, the rearranged screen layout may be applied while the palm touch input is maintained.

According to various embodiments of the present disclosure, the rearranging of the screen layout may include at least one of a coordinate change of the object, a size control of the object, and a shape change of the object.

According to various embodiments of the present disclosure, the inactivating may include inactivating a touch input on the whole area of at least one display, at which the touch input is sensed, of the first display and the second display when the user input corresponds to a touch input sensed at a specific area of at least one of the first display and the second display.

According to various embodiments of the present disclosure, the inactivating may include inactivating a touch input on the whole area of at least one device, at which the touch input is not sensed, of the first display and the second display when a touch input is repetitively received over a specific count at a specific area of at least one of the first display and the second display as the user input.

According to various embodiments of the present disclosure, the inactivating may include temporarily inactivating a touch input on the whole area of one display, having a relatively low touched-area ratio, from among the first display and the second display when the user input corresponds to a touch input sensed at a boundary where the first display and the second display contact with each other.

According to various embodiments of the present disclosure, the inactivating may include inactivating a touch input on the whole area of at least one display, not including a function object, of the first display and the second display when the user input corresponds to a touch input sensed from at least a portion of the function object of at least one of the first display and the second display.

According to various embodiments of the present disclosure, the display controlling method may not apply the inactivation when a touched-area ratio of the function object is lower than a specific area ratio.

According to various embodiments of the present disclosure, the inactivating may include, when the user input corresponds to a scroll input for scrolling at least one object displayed on at least one of the first display and the second display, controlling a touch input as a scroll input on an object of a first touched screen even though the touch input goes over to the other display from the first touched display, and inactivating a touch input on a remaining display until the touch input is released.

According to various embodiments of the present disclosure, the inactivating of a touch input may include, when the user input corresponds to a scroll input for scrolling at least one object displayed on at least one of the first display and the second display and the touch input is dragged to the other display from a first touched display, inactivating a touch input on the whole area of a remaining display not being the first touched display.

According to various embodiments of the present disclosure, the inactivating of a touch input may include, when the user input corresponds to a touch input sensed from at least one of the first display and the second display and dragged from one position to another position, controlling the touch input as a touch input of the first touched display and inactivating a touch input of a remaining display.

Each of the above-mentioned elements of the electronic device according to various embodiments of the present disclosure may be configured with one or more components, and the names of the elements may be changed according to the type of the electronic device. The electronic device according to various embodiments of the present disclosure may include at least one of the above-mentioned elements, and some elements may be omitted or other additional elements may be added. Furthermore, some of the elements of the electronic device according to various embodiments of the present disclosure may be combined with each other so as to form one entity, so that the functions of the elements may be performed in the same manner as before the combination.

The term "module" used herein may represent, for example, a unit including one or more combinations of hardware, software and firmware. The term "module" may be interchangeably used with the terms "unit," "logic," "logical block," "component" and "circuit." The "module" may be a minimum unit of an integrated component or may be a part thereof. The "module" may be a minimum unit for performing one or more functions or a part thereof. The "module" may be implemented mechanically or electronically. For example, the "module" according to various embodiments of the present disclosure may include at least one of an application-specific IC (ASIC) chip, a field-programmable gate array (FPGA), and a programmable-logic device for performing some operations, which are known or will be developed.

According to various embodiments of the present disclosure, at least a portion of an apparatus (e.g., modules or functions thereof) or a method (e.g., operations) according to various embodiments of the present disclosure, for example, may be implemented by instructions stored in a computer-readable storage media in the form of a programmable module. The instruction, when executed by one or more processors (e.g., the application processor 410), may perform a function corresponding to the instruction. The computer-readable storage media, for example, may be the memory 430. At least a portion of the programming module, for example, may be implemented (e.g., executed) by the application processor 410. At least a portion of the programming module may include the following for performing one or more functions: a module, a program, a routine, sets of instructions, or a process.

A computer-readable recording medium may include a hard disk, a magnetic media such as a floppy disk and a magnetic tape, an optical media such as Compact Disc Read Only Memory (CD-ROM) and a DVD, a magneto-optical media such as a floptical disk, and hardware devices specifically configured to store and perform a program instruction (e.g., a programming module), such as ROM, RAM, and a flash memory. Also, a program instruction may include not only a mechanical code such as things generated by a compiler but also a high-level language code executable on a computer using an interpreter. The above hardware unit may be configured to operate via one or more software modules for performing an operation of the present disclosure, and vice versa.

Various aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), CD-ROMs, magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present disclosure can be easily construed by programmers skilled in the art to which the present disclosure pertains.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

A module or a programming module according to an embodiment of the present disclosure may include at least one of the above elements, or a portion of the above elements may be omitted, or additional other elements may be further included. Operations performed by a module, a programming module, or other elements according to an embodiment of the present disclosure may be executed sequentially, in parallel, repeatedly, or in a heuristic method. Also, a portion of operations may be executed in different sequences, omitted, or other operations may be added.

A display controlling method and an electronic device according to various embodiments of the present disclosure may inactivate a touch input on at least one of a plurality of displays according to a user input, thereby preventing an abnormal operation occurring between the displays. When a specific user input is released, a touch input of an inactivated display may be activated, thereby improving convenience of a user.

While the present disclosure has been shown and described with reference to various embodiments thereof, it will be understood by those skilled in the art that various changes in form and details may be made therein without departing from the scope of the present disclosure as defined by the appended claims.

## Claims

1. An electronic device (100) comprising:
a display module (110; 210; 310; 460) including a first display (10) and a second display (20);
an input interface (120; 220; 320) configured to receive a user input on at least one of the first display (10) and the second display (20); and
a controller (130; 230; 330) configured to inactivate a touch input on an at least partial display area of at least one of the first display (10) and the second display (20), based on the user input.

2. The electronic device of claim 1, wherein, if the user input corresponds to a predetermined touch input, the at least partial display area indicates at least one display, at which the user input is sensed or not sensed, of the first display (10) and the second display (20).

3. The electronic device of claim 2, wherein after inactivating the touch input, if a new user input which corresponds to a predetermined touch input is sensed on the at least one display where the touch input is inactivated, the controller (130; 230; 330) is further configured to activate the touch input to be touched on the at least one display where the touch input is inactivated.

4. The electronic device of claim 1,
wherein the controller (130; 230; 330) is further configured to inactivate a touch input on a display area set as a palm touch area (30; 31,32), if the user input corresponds to a palm touch input, and
wherein the palm touch area is an at least partial display area of at least one of the first display (10) and the second display (20).

5. The electronic device of claim 4, wherein, if the palm touch input is released, the controller (130; 230; 330) is further configured to cancel the inactivation of the touch input to be touched on the palm touch area (30; 31,32).

6. The electronic device of claim 4, further comprising:
a sensor module (140; 240; 340) configured to sense a directivity of the electronic device (100),
wherein the at least partial display area is set at least differently based on the directivity of the electronic device.

7. The electronic device of claim 4, wherein, if an object is displayed on the palm touch area (30; 31, 32), the controller (130; 230; 330) is further configured to rearrange a screen layout of at least one display, at which the object is placed, of the first display (10) and the second display (20).

8. The electronic device of claim 7, wherein the controller (130; 230; 330) is further configured to apply the rearranged screen layout while the palm touch input is maintained.

9. The electronic device of claim 7, wherein the rearrangement of the screen layout is performed by using at least one of a location change of the object, a size control of the object, and a shape change of the object.

10. The electronic device of claim 1, wherein, if the user input corresponds to a touch input sensed by a specific count on a specific area of at least one of the first display (10) and the second display (20), the at least a partial display area corresponds to at least one display, of the first display (10) and the second display, at which the user input is not sensed (20).

11. The electronic device of claim 1, wherein, if the user input corresponds to a touch input sensed on a boundary where the first display (10) and the second display (20) contact with each other, the at least partial display area indicates one display, having a relatively low touched-area ratio, from among the first display (10) and the second display (20).

12. The electronic device of claim 1, wherein, if the user input corresponds to a touch input sensed from at least a portion of a function object displayed on at least one of the first display (10) and the second display (20), the at least partial display area corresponds to at least one display, of the first display (10) and the second display (20), that does not include the function object, and
the inactivation of the touch input on the at least one display not including the function object is not performed if a touched-area ratio of the function object is lower than a specific area ratio.

13. The electronic device of claim 1, wherein, if the user input is a scroll input scrolling at least one object displayed on at least one of the first display (10) and the second display (20), and if the scroll input is dragged from one display that is first touched to another display, of the first display (10) and the second display (20), the controller (130; 230; 330) is further configured to process the scroll input as a scroll input relating to the first-touched display, and
the inactivation of the user input is performed on the other display, of the first display (10) and the second display (20), until the touch input is released.

14. The electronic device of claim 1, wherein, if the user input corresponds to a touch input dragged from a position, sensed from at least one of the first display (10) and the second display (20), to another position, and if the touch input is dragged from one display that is first touched to another display, of the first display (10) and the second display (20), the inactivation of the user input is performed on the other display, of the first display (10) and the second display (20), until the touch input is released.

15. A display controlling method comprising:
receiving a user input on at least one of a first display (10) and a second display (20) of an electronic device (operation 1910); and
inactivating a touch input on at least a partial display area of at least one of the first display (10) and the second display (20), based on the user input (operation 1920).
